# FASCICULE DE BREVET EUROPEEN

(11) **EP 0 855 164 B1**
(45) Date de publication et mention de la délivrance du brevet: **06.11.2002**
(21) Numéro de dépôt: 98400144.6
(22) Date de dépôt: 23.01.1998
(51) Int. Cl.: A47L 15/42, B01J 49/00

(54) **Adoucisseur à encombrement réduit pour machine électro-domestique**
Wasserenthärter mit vermindertem Platzbedarf für Elektrohausgerät
Compact water softening device for electrical domestic machine

(30) Priorité: 28.01.1997 FR 9700894
(43) Date de publication de la demande: 29.07.1998
(73) Titulaire: ESSWEIN S.A., F-85002 La Roche-sur-Yon (FR)
(72) Inventeur: Clement, Jean-Francis, 94117 Arcueil Cedex (FR); Delavaud, Emile, 94117 Arcueil Cedex (FR); Gailledrat, Benoit, 94117 Arcueil Cedex (FR)
(74) Mandataire: Rinuy, Santarelli

(56) Documents cités:
- DE-A- 3 508 276
- DE-A- 4 118 586
- DE-C- 4 413 432
- GB-A- 2 090 874

## Description

La présente invention se rapporte à un adoucisseur à encombrement réduit pour machine électro-domestique.

Les lave-vaisselle utilisant de l'eau contenant des sels minéraux comportent généralement un adoucisseur d'eau. Un tel adoucisseur est habituellement constitué d'un pot contenant des résines échangeuses d'ions et d'un pot contenant du sel destiné à la régénération de ces résines. De l'eau est introduite dans le pot à sel pour former de la saumure, saturée en sel. Un tel adoucisseur d'eau est décrit dans le document GB-A-2090874.

L'injection de cette saumure dans le pot à résines est réalisée grâce à la poussée produite par un volume d'eau contenue dans un "répartiteur" situé au-dessus du pot à sel.

Pour pouvoir contenir un volume d'eau suffisant et présenter une hauteur d'eau suffisante pour créer la pression nécessaire à l'expulsion de la saumure vers le pot à résines, ce répartiteur doit être logé sur le côté de la machine, et présente un encombrement important. En outre, dans le cas de machines bruyantes, telles que les lave-vaisselle, nécessitant une isolation phonique, ledit répartiteur empiète sur le volume dans lequel cette isolation devrait être disposée.

La présente invention a pour objet un adoucisseur d'eau pour machine électro-domestique, qui ait un encombrement réduit, et qui, le cas échéant, n'empiète pas sur le volume dans lequel peut être disposée l'isolation phonique de la machine, tout en ayant une efficacité comparable à celle des adoucisseurs connus.

L'adoucisseur conforme à l'invention comporte un pot à résines communiquant avec un pot à sel, et un réservoir d'eau adapté à être relié au réseau d'eau d'une part, et relié d'autre part au pot à sel par une pompe d'injection d'eau.

L'adoucisseur est disposé de préférence dans la partie basse de la machine, sous sa cuve.

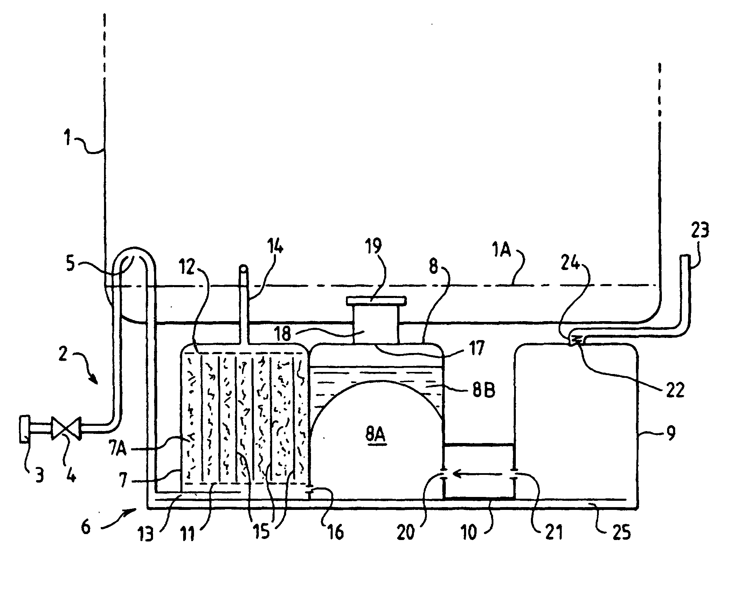

La présente invention sera mieux comprise à la lecture de la description détaillée d'un mode de réalisation, pris à titre d'exemple non limitatif et illustré par le dessin annexé, dont la figure unique est une vue en coupe simplifiée et partielle d'un lave-vaisselle équipé d'un adoucisseur conforme à l'invention.

L'invention est décrite ci-dessous en référence à l'implantation d'un adoucisseur d'eau dans un lave-vaisselle, mais il est bien entendu que cet adoucisseur peut être implanté dans d'autres appareils nécessitant son emploi, en particulier mais non nécessairement, des appareils dans lesquels la place disponible pour un adoucisseur est limitée.

Sur la figure unique du dessin, on a seulement représenté la partie inférieure de la cuve 1 du lave-vaisselle et son circuit 2 d'arrivée d'eau. Ce circuit 2 comprend essentiellement un raccord 3 (branché sur le réseau de distribution d'eau) relié via une électro-vanne 4 à un dispositif 5 anti-retour, qui est par exemple constitué par une rupture de mise à l'air (également appelé "break d'air"). Ce dispositif 5 évite l'injection d'eau de la machine vers le réseau de distribution d'eau. Il est situé au-dessus du niveau d'eau maximal 1A. Le dispositif 5 est suivi de l'adoucisseur d'eau 6 de l'invention, disposé sous la cuve 1.

L'adoucisseur comporte un pot à résines 7, un pot à sel 8, un réservoir d'eau 9 et une pompe d'injection d'eau 10.

Dans le pot à résines 7, les résines 7A sont disposées entre une grille inférieure 11 et une grille supérieure 12. La grille 11 est disposée parallèlement au fond du pot, à une distance de celui-ci suffisante pour permettre à l'eau arrivant par une conduite 13 depuis le dispositif 5 dans le fond du pot de s'écouler de façon pratiquement homogène à travers toute la surface de la grille 11. La grille 12 est disposée à faible distance de la paroi supérieure du pot 7 de laquelle part une conduite 14 de sortie de l'eau ayant traversé de bas en haut les résines 7A. La conduite 14 traverse de façon étanche le fond de la cuve 1 et son extrémité est située légèrement au-dessus (par exemple à environ 1 cm) du niveau maximal 1A de l'eau contenue dans la cuve 1. De façon avantageuse, des cloisons 15, parallèles à l'axe du pot 7, s'étendent dans le pot entre les grilles 11 et 12. Ces cloisons 15 peuvent par exemple être cylindriques et concentriques ou bien en forme de nid d'abeilles. Elles permettent d'améliorer les échanges ioniques entre l'eau du réseau, arrivant par la conduite 13, et les résines 7A. En effet, la hauteur du volume disponible sous la cuve 1 est généralement faible, ce qui oblige, bien entendu, d'utiliser un pot 7 de faible hauteur et donc d'avoir un court parcours moyen de l'eau entre l'entrée et la sortie du pot 7.

Le pot 7 est, dans le cas présent, attenant au pot 8 et communique avec celui-ci par un orifice commun 16 situé légèrement au-dessous de la grille 11. Bien entendu, les pots 7 et 8 ne sont pas nécessairement accolés l'un à l'autre, et peuvent être reliés par un tube aboutissant à des orifices situés dans leur partie inférieure, au même niveau que l'orifice 16. Le pot 8 comporte un orifice supérieur de chargement 17 surmonté d'un col 18 traversant de façon étanche le fond de la cuve 1 et fermé hermétiquement par un bouchon 19. Le pot 8 est disposé en un endroit tel que le bouchon 19 soit facilement accessible à l'utilisateur. Le pot 8 contient, en utilisation de la machine une réserve de sel 8A et une quantité minimale d'eau 8B, permettant d'avoir en permanence dans le pot 8 une certaine quantité de saumure saturée, suffisante pour régénérer au moins une fois les résines du pot 7.

La sortie de la pompe 10 est reliée au pot 8 via un orifice 20 situé près du fond de ce pot, à l'opposé de l'orifice 16. L'entrée de la pompe 10 est reliée au réservoir 9 via un orifice 21 pratiqué à sa base. La pompe 10 peut être accolée aux pots 8 et 9, comme représenté sur le dessin, ou bien en être distante et reliée par des tubes à ceux-ci. Dans la paroi supérieure du réservoir 9, on pratique un orifice 22, auquel on fixe un tube 23 débouchant à l'air libre, et dans lequel on dispose un clapet 24 à ressort, normalement fermé et s'ouvrant lorsqu'une dépression est créée dans le réservoir 9. Ce réservoir 9 est alimenté en eau du réseau par un tube 25 partant du dispositif 5.

L'adoucisseur décrit ci-dessus fonctionne de la façon suivante. En régime de lavage, remplissage en eau de la cuve 1, l'eau du réseau passe par le dispositif 5 et dans la conduite 13 pour arriver dans le fond du pot 7. De là, l'eau remonte dans les divers compartiments délimités par les cloisons 15, traverse les résines 7A qui la débarrassent des ions calcaires dont elle est chargée et remonte dans le tube 14 pour se déverser dans la cuve 1.

En phase de régénération des résines 7A, le réservoir 9 étant presque plein d'eau du réseau (son niveau est contrôlé par un dispositif approprié, connu en soi), la pompe 10 prélève une quantité déterminée d'eau dans ce réservoir et l'injecte sous pression dans le pot 8. La pression exercée par la pompe 10 dans le pot 8 chasse de celui-ci une quantité de saumure correspondant à la quantité d'eau prélevée dans le réservoir 9.

Cette saumure traverse le pot 7 de bas en haut; régénère les résines 7A de façon connue en soi, et se déverse dans la cuve 1. Grâce au fait que le pot 8 est fermé de façon étanche par le bouchon 19, la pression exercée par la pompe 10 à l'entrée du pot 8 en chasse facilement la saumure vers le pot 7. La hauteur du pot 9 est donc de peu d'importance du moment que sa contenance correspond au moins à la quantité de saumure que l'on veut chasser du pot 8 vers le pot 7. Il suffit que le dispositif 5, s'il est du type à rupture d'air, soit situé légèrement au-dessus du niveau d'eau maximal 1A (par exemple environ 30 mm au-dessus de ce niveau).

Ainsi, du fait que dans un lave-vaisselle de la place est disponible sous la cuve, on peut y implanter facilement le dispositif de l'invention, ce qui libère de la place sur ses côtés pour y disposer une quantité suffisante de matériau d'isolation phonique, et permet, le cas échéant, d'augmenter le volume utile de la cuve.

## Revendications

1. Adoucisseur (6) pour machine électro-domestique, comportant un pot à résines (7) communiquant avec un pot à sel (8) et un réservoir d'eau (9) adapté à être relié au réseau d'eau, **caractérisé en ce que** le réservoir d'eau (9) est relié au pot à sel (8) par une pompe d'injection d'eau (10).

2. Adoucisseur selon la revendication 1, **caractérisé en ce qu'**il peut être disposé dans la partie basse de la machine, sous sa cuve (1).

3. Adoucisseur selon la revendication 2, **caractérisé en ce qu'**il est adapté à être relié à un circuit d'arrivée d'eau (2) comportant un dispositif anti-retour, le dispositif anti-retour étant constitué par une rupture de mise à l'air (5) et disposé au-dessus du niveau d'eau maximal (1A) de la cuve (1).

4. Adoucisseur selon l'une des revendications 1 à 3, **caractérisé en ce que** dans le pot à résines, les résines (7A) sont disposées entre une grille inférieure (11) et une grille supérieure (12), et que des cloisons (15) sont disposées entre ces grilles.

## Claims

1. Water softener (6) for a domestic electrical machine, comprising a resin container (7) communicating with a salt container (8) and a water reservoir (9) adapted to be connected to the water system, **characterised in that** the water reservoir (9) is connected to the salt container (8) by a water inlet pump (10).

2. Water softener according to Claim 1, **characterised in that** it may be disposed in the bottom part of the machine, under its tank (1).

3. Water softener according to Claim 2, **characterised in that** it is adapted to be connected to a water inlet circuit (2) comprising a non-return device, the non-return device consisting of a break in the vent (5) and disposed above the maximum water level (1A) in the tank (1).

4. Water softener according to one of Claims 1 to 3, **characterised in that**, in the resin container, the resins (7A) are disposed between a bottom grille (11) and a top grille (12), and **in that** partitions (15) are disposed between these grilles.

## Patentansprüche

1. Wasserenthärter (6) für ein Elektro-Haushaltsgerät, mit einem Harztopf (7), der mit einem Salztopf (8) und einem Wasserbehälter (9) in Verbindung steht, der mit dem Wasserversorgungsnetz verbindbar ist, **dadurch gekennzeichnet, daß** der Wasserbehälter (9) mit dem Saltztopf (8) über eine Wassereinspritzungspumpe verbunden ist.

2. Wasserenthärter nach Anspruch 2, **dadurch gekennzeichnet, daß** er im unteren Teil des Geräts unter dessen Wanne (1) angeordnet werden kann.

3. Wasserenthärter nach Anspruch 2, **dadurch gekennzeichnet, daß** er mit einer Wasserzulaufleitung (2) verbindbar ist, die eine Rücklaufsperre aufweist, wobei die Rücklaufsperre aus einer Entlüftungsunterbrechung (5) besteht und oberhalb des maximalen Wasserpegels (1a) der Wanne (1) liegt.

4. Wasserenthärter nach einem der Ansprüche 1 bis 3, **dadurch gekennzeichnet, daß** die Harze (7A) im Harztopf zwischen einem unteren Gitter (11) und einem oberen Gitter (12) angeordnet sind und daß zwischen diesen Gittern Trennwände (15) angeordnet sind.
